# EUROPÄISCHE PATENTANMELDUNG

(11) **EP 0 815 715 A2**
(43) Veröffentlichungstag der Anmeldung: **07.01.1998**
(21) Anmeldenummer: 97890114.8
(22) Anmeldetag: 01.07.1997
(51) Int. Cl.: A01C 7/04, A01C 7/18

(54) **Vorrichtung zum Befüllen von Saatgutmagazinen mit Samenkörnern ausgewählter Zuchtpflanzen**

(30) Priorität: 02.07.1996 AT 1163/96
(71) Anmelder: Wintersteiger Gesellschaft m.b.H., A-4910 Ried (AT)
(72) Erfinder: Aigner, Johann Ing., 4910 Ried (AT)
(74) Vertreter: Hübscher, Helmut, Dipl.-Ing.

(57) **Zusammenfassung**

Es wird eine Vorrichtung zum Befüllen von Saatgutmagazinen (18) mit Samenkörnern ausgewählter Zuchtpflanzen beschrieben, welche Vorrichtung aus einer Einrichtung (5) zum Wiegen einer vorgegebenen Anzahl von jeweils aus den Samenkörnern einer Zuchtpflanze gebildeten Körnergruppen, aus einer an die Wiegeeinrichtung (5) angeschlossenen Einrichtung (7) zum Befüllen einer der Anzahl der Körnergruppen entsprechenden Zahl von Behältern (8) mit den einzelnen Körnergruppen und aus einer mit den Körnergruppen ausgewählter Behälter (8) beschickbaren Magazinfülleinrichtung (14) besteht. Um vorteilhafte Konstruktionsverhältnisse zu schaffen, wird vorgeschlagen, daß ein Speicher (6) für die den einzelnen Behältern (8) zugeordneten Meßwerte der Wiegeeinrichtung (5) in eine Auswerteschaltung (10) zur meßwertabhängigen Auswahl einer vorgegebenen Anzahl von Behältern (8) einlesbar ist, daß die über eine Eingabeeinheit (12) überschreibbare, mit einer Anzeige (11) verbundene Auswerteschaltung (10) eine Förderweiche (13) ansteuert, die einen die Behälter (8) in einer vorbestimmten Anordnung aufnehmenden Schrittförderer (9) einerseits mit einem Sammelbehälter (15) für die auszuscheidenden Körnergruppen und anderseits mit der Magazinfülleinrichtung (14) verbindet.

## Beschreibung

Die Erfindung bezieht sich auf eine Vorrichtung zum Befüllen von Saatgutmagazinen mit Samenkörnern ausgewählter Zuchtpflanzen, bestehend aus einer Meßeinrichtung zum Erfassen vorgegebener Auswahlparameter, beispielsweise des Gewichtes oder der Körnerzahl, einer vorgegebenen Anzahl von jeweils aus den Samenkörnern einer Zuchtpflanze gebildeten Körnergruppen, aus einer an die Meßeinrichtung angeschlossenen Einrichtung zum Befüllen einer der Anzahl der Körnergruppen entsprechenden Zahl von Behältern mit den einzelnen Körnergruppen und aus einer mit den Körnergruppen ausgewählter Behälter beschickbaren Magazinfülleinrichtung.

Um die Samenkörner ausgewählter Einzelpflanzen von beispielsweise reihenweise in Parzellen wachsenden Zuchtpflanzen für die Weiterzucht zu gewinnen, werden aus bestimmten Pflanzenreihen Einzelpflanzen nach vorgegebenen Kriterien in einer Anzahl ausgewählt, die größer als die benötigte Pflanzenanzahl ist, so daß aus den je Pflanze gewonnenen Samenkörnern jene für die Züchtung weiterverwendet werden können, die vorgegebenen Auswahlkriterien vor allem hinsichtlich des späteren Ertrages entsprechen, der in Abhängigkeit von den einzelnen Pflanzensorten im allgemeinen durch das Gesamtgewicht oder die Körnerzahl bestimmt wird. Aus diesem Grunde werden beispielsweise die jeweils von einer Einzelpflanze erhaltenen Samenkörner als Gruppe gewogen und durch den Vergleich der Samengesamtgewichte der Einzelpflanzen die für die Weiterzucht geeignetsten ausgewählt. Die ausgewählten Körnergruppen werden dann in für das Aussäen bestimmte Saatgutmagazine eingefüllt, die mit entsprechenden Kammern für die gruppenweise Aufnahme der Samenkörner versehen sind. Obwohl für den Wiegevorgang und das Abfüllen der gewogenen Körnergruppen in geeignete Behälter sowie für das Befüllen der Saatgutmagazine entsprechende Einrichtungen bekannt sind, bleibt die Auswahl der Samenkörner entsprechender Einzelpflanzen aufwendig, wobei sich wegen der damit verbundenen Handarbeit eine Reihe von Fehlermöglichkeiten eröffnen. In diesem Zusammenhang ist zu bedenken, daß in einem Saatzuchtbetrieb eine sehr große Anzahl von einzeln auszuwählenden Zuchtpflanzen anfallen, deren Samenkörner tunlichst unvermengt magaziniert werden sollen.

Der Erfindung liegt somit die Aufgabe zugrunde, eine Vorrichtung der eingangs geschilderten Art so auszubilden, daß die Auswahl der Samenkörner einzelner Zuchtpflanzen und die pflanzenweise Befüllung der Saatgutmagazine mit den ausgewählten Körnergruppen mit einem vergleichsweise geringen Arbeitsaufwand und einem weitgehenden Ausschluß von Fehlerquellen durchgeführt werden kann.

Die Erfindung löst die gestellte Aufgabe dadurch, daß ein Speicher für die den einzelnen Behältern zugeordneten Meßwerte der Meßeinrichtung in eine Auswerteschaltung zur meßwertabhängigen Auswahl einer vorgegebenen Anzahl von Behältern einlesbar ist und daß die mit einer Anzeige verbundene Auswerteschaltung eine Förderweiche ansteuert, die einen die Behälter in einer vorbestimmten Anordnung aufnehmenden Schrittförderer einerseits mit einem Sammelbehälter für die auszuscheidenden Körnergruppen und anderseits mit der Magazinfülleinrichtung verbindet.

Durch das Vorsehen einer Auswerteschaltung, in die die Meßwerte der Meßeinrichtung, beispielsweise das Gesamtgewicht oder die Körneranzahl einer Körnergruppe, über einen Meßwertspeicher eingelesen werden können, wird es in einfacher Art möglich, eine meßwertabhängige Auswahl der nach dem Meßvorgang einzeln in Behälter abgefüllten Körnergruppen vorzuschlagen, die entweder bestätigt oder von Hand aus über eine an die Auswerteschaltung angeschlossene Eingabeeinheit überschrieben werden kann, um dann mit der gültigen Auswahl die der Magazinfülleinrichtung vorgeschaltete Förderweiche so anzusteuern, daß lediglich die ausgewählten Körnergruppen behälterweise in die Magazinfülleinrichtung entleert werden, während die auszuscheidenden Körnergruppen in einen Sammelbehälter gelangen. Die einfache Einzelbefüllung der Behälter im Anschluß an die Meßeinrichtung und deren Einzelentleerung werden mittels eines Schrittförderers erreicht, der die Behälter in einer vorgegebenen Anordnung aufnimmt, so daß aufgrund der vorgegebenen Reihenfolge der Befüllung die in dieser Reihung gespeicherten Meßwerte eindeutig den einzelnen Behältern zugeordnet werden können. Da somit die Behälter weder für die Auswahl der Körnergruppen noch für die Beschickung der Magazinfülleinrichtung einer händischen Handhabung ausgesetzt sind, können Fehler zwischen dem Meßvorgang und der Befüllung der Saatgutmagazine praktisch ausgeschlossen werden.

Um die Überprüfung der meßwertabhängigen Auswahl der für die Züchtung zu magazinierenden Körnergruppen nicht bei einer schrittweisen Behälterförderung vornehmen zu müssen, ist die Behälterförderung für diesen Zweck zu unterbrechen. Damit eine solche Unterbrechung der Behälterförderung für die Auswahl der einzelnen Körnergruppen keinen Stillstand bei der Behälterbefüllung im Bereich der Meßeinrichtung und bei der Behälterentleerung im Bereich der Magazinfülleinrichtung bedingt, kann der Schrittförderer drei zwischen der Meßeinrichtung, einer die Anzeige und Eingabeeinheit für die Auswerteschaltung umfassenden Auswahlstation und der Förderweiche zyklisch verlagerbare, jeweils für sich schrittweise antreibbare Umlaufförderer mit jeweils zumindest einem der Anzahl der Körnergruppen entsprechenden Behältersatz aufweisen. Während der Auswahl der einzelnen Körnergruppen in der Auswahlstation können die Behälter des Umlaufförderers im Bereich der Meßeinrichtung befüllt und die des Umlaufförderers im Bereich der Magazinfülleinrichtung entleert werden, um dann durch eine zyklische Verlagerung der Umlaufförderer die entleerten Behälter über die Meßeinrichtung zu befüllen, aus den vorher abgefüllten Behältern eine entsprechende Auswahl zu treffen und die vorher ausgewählten Behälter in ein Saatgutmagazin zu entleeren. Die zyklische Verlagerung der einzelnen Umlaufförderer kann in unterschiedlicher Weise erfolgen. Besonders einfache Konstruktionsverhältnisse ergeben sich in diesem Zusammenhang dann, wenn die Umlaufförderer auf einem Drehtisch angeordnet sind.

Die Saatgutmagazine sind in herkömmlicher Weise mit in zwei parallelen Reihen angeordneten Aufnahmekammern versehen. Um je nach Bedarf die Aufnahmekammern in einer bestimmten Reihenfolge befüllen zu können, kann die Magazinfülleinrichtung wenigstens eine über die Auswerteschaltung ansteuerbare Förderweiche zum Befüllen neben- bzw. hintereinandergereihter Aufnahmekammern der Saatgutmagazine aufweisen.

Zur Befüllung der einzelnen Aufnahmekammern der Saatgutmagazine mit nach vorgegebenen Auswahlkriterien ausgewählten Samenkörnern kann in weiterer Ausbildung der Erfindung die Magazinfülleinrichtung wenigstens eine Vereinzelungseinrichtung für die Samenkörner der einzelnen Körnergruppen mit einer angeschlossenen Meßeinrichtung, beispielsweise zum Zählen oder Wiegen der vereinzelten Samenkörner, aufweisen, wobei der Vereinzelungseinrichtung eine von der Meßeinrichtung ansteuerbare Förderweiche nachgeordnet ist, die die Vereinzelungseinrichtung einerseits mit dem zu befüllenden Saatgutmagazin und anderseits mit einem Sammelbehälter verbindet.

Der Meßeinrichtung für die einzelnen Körnergruppen müssen die aus den einzelnen Zuchtpflanzen gewonnenen Samenkörner gruppenweise zugefördert werden. Besonders günstige Konstruktionsbedingungen ergeben sich in diesem Zusammenhang, wenn der Meßeinrichtung zumindest eine in die Meßeinrichtung entleerbare Einzelpflanzendrescheinrichtung vorgeschaltet ist, so daß nach dem Dreschvorgang die aus einer einzigen Zuchtpflanze erhaltenen Samenkörner gemeinsam gemessen und in einen Behälter abgefüllt werden, aus dem sie erst in die Magazinfülleinrichtung entleert werden, was ein Vermengen der Samenkörner verschiedener Zuchtpflanzen praktisch ausschließt.

In der Zeichnung ist der Erfindungsgegenstand beispielsweise dargestellt. Es zeigen
- Fig. 1: eine erfindungsgemäße Vorrichtung zum Befüllen von Saatgutmagazinen mit Samenkörnern ausgewählter Zuchtpflanzen in einem schematischen Blockschaltbild,
- Fig. 2: eine erfindungsgemäße Vorrichtung in einer vereinfachten Draufsicht,
- Fig. 3: die Vorrichtung nach der Fig. 2 ausschnittsweise im Bereich der Einzelpflanzendrescheinrichtung und der Meßeinrichtung in einer Seitenansicht in einem größeren Maßstab,
- Fig. 4: die Einzelpflanzendrescheinrichtung in einem vereinfachten Vertikalschnitt nach der Linie IV-IV der Fig. 3,
- Fig. 5: die Magazinfülleinrichtung in einer schematischen Vorderansicht und
- Fig. 6: die Magazinfülleinrichtung in einer schematischen Seitenansicht.

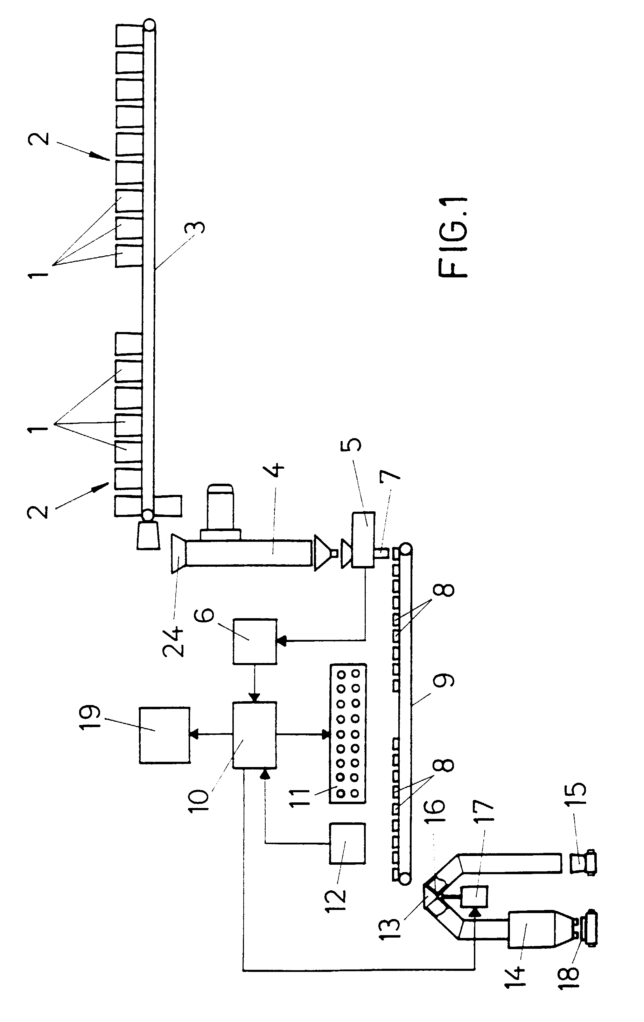

Wie dem Blockschaltbild nach der Fig. 1 entnommen werden kann, werden die einzelnen einer bestimmten Zuchtparzelle entnommenen Zuchtpflanzen jeweils für sich in einem Behälter 1 eines Behältersatzes 2 eingebracht, der sich aus einem der ausgewählten Pflanzenzahl entsprechenden Anzahl von in einer bestimmten Anordnung auf einem Umlaufförderer 3 hintereinander- bzw. nebeneinandergereihter Behälter 1 zusammensetzt. Aus diesen Behältern 1 werden die Zuchtpflanzen nacheinander in eine Einzelpflanzendrescheinrichtung 4 entleert, in der die Einzelpflanzen zur Gewinnung ihrer Samenkörner gedroschen werden, bevor die Samenkörner, die je Pflanze eine Körnergruppe bilden, an eine z. B. als Wiegeeinrichtung ausgebildete Meßeinrichtung 5 abgegeben werden, in der das Gesamtgewicht der jeweiligen Körnergruppe ermittelt und in einen Meßwertspeicher 6 eingelesen wird. Die gewogenen Körnergruppen werden über eine an die Meßeinrichtung 5 angeschlossene Befülleinrichtung 7 in wieder in Sätzen zusammengefaßte Behälter 8 auf einem Schrittförderer 9 gefüllt, wobei aufgrund der vorgegebenen Füllreihenfolge eine eindeutige Zuordnung der abgespeicherten Meßdaten zu den einzelnen Bechern 8 sichergestellt ist.

Der Meßwertspeicher 6 wird in eine Auswerteschaltung 10 ausgelesen, die aus der vorgegebenen Anzahl an Körnergruppen eine Teilanzahl aufgrund der Meßdaten auswählt. In der Praxis werden häufig aus einer Anzahl von 18 Zuchtpflanzen z. B. die zwölf ertragreichsten ausgewählt, indem die Gesamtgewichte der einzelnen Körnergruppen miteinander verglichen werden. Anstelle des Gesamtgewichtes könnte aber auch in Abhängigkeit von der jeweiligen Pflanzenart die Körneranzahl, das Körnervolumen oder ein anderer Meßwert einer Körnergruppe als Auswahlparameter bestimmt werden. Die Auswerteschaltung 10 übernimmt diese Auswahl und zeigt sie auf einer Anzeige 11 an, und zwar vorteilhaft in Form der Behältersätze, so daß bei einer optischen Überprüfung dieser Auswahl eine einfache Zuordnung der ausgewählten Körnergruppen zu den einzelnen Behältern 8 möglich ist. Über eine Eingabeeinheit 12 kann die über die Auswerteschaltung 10 vorgegebene Auswahl von Hand aus überschrieben werden, um im Einzelfall zusätzliche Auswahlkriterien berücksichtigen zu können.

Liegt die Auswahl der in ein Saatgutmagazin einzufüllenden Körnergruppen fest, so werden die Behälter 8 über eine Förderweiche 13 der Magazinfülleinrichtung 14 oder einem Sammelbehälter 15 zugeführt, der die Samenkörner der auszuscheidenden Körnergruppen aufnimmt. Die Förderweiche 13 kann durch eine einfache Umschaltklappe 16 gebildet werden, die mit einem über die Auswerteschaltung 10 ansteuerbaren Stelltrieb 17 antriebsverbunden ist. Die Samenkörner aus den schrittweise angeförderten und entleerten Behältern 8 werden somit je nach der groffenen Auswahl entweder in ein Saatgutmagazin 18 abgefüllt oder in den Sammelbehälter 15 geleitet. Damit die erforderlichen Zucht- und Auswahldaten dem jeweiligen Saatgutmagazin 18 zugeordnet werden können, kann die Auswerteschaltung 10 an einen Drucker 19 angeschlossen sein, über den entsprechende Datenblätter erstellt und mit den notwendigen Kennungen versehene Aufkleber für die Saatgutmagazine erhalten werden. Es könnten aber auch die Saatgutmagazine unmittelbar mit einer Kennzahl bedruckt werden.

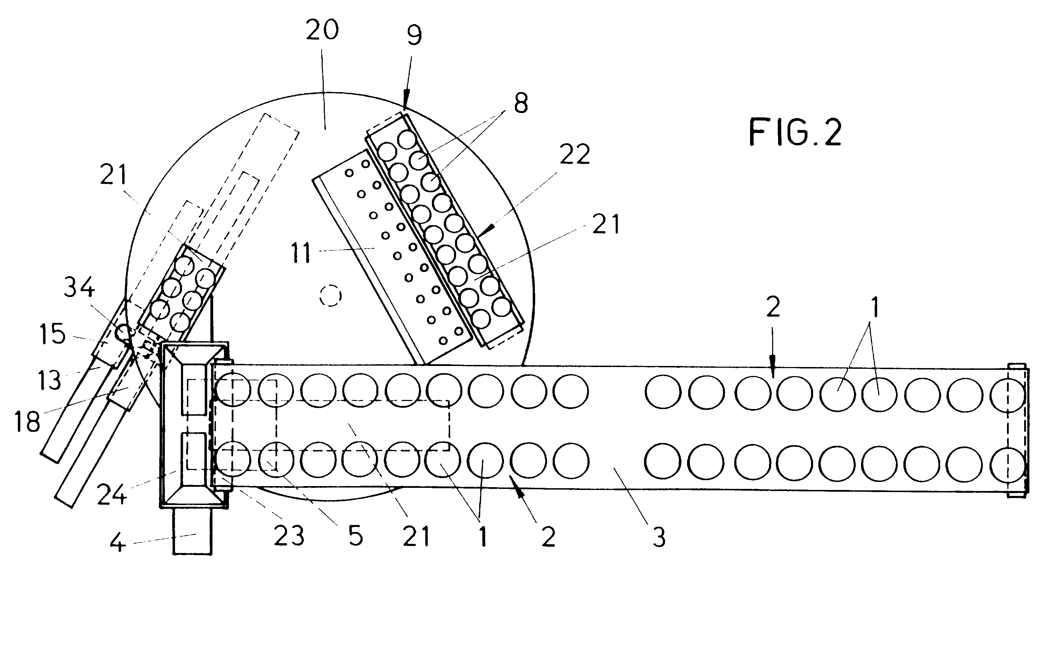

In der Fig. 2 ist eine mögliche konstruktive Ausführungsform einer Vorrichtung zum Befüllen von Saatgutmagazinen 18 mit Samenkörnern ausgewählter Zuchtpflanzen dargestellt. Der in Fig. 1 schematsich angedeutete Schrittförderer 9 besteht in diesem Fall aus einem Drehtisch 20, der drei gleichmäßig verteilte, jeweils für sich schrittweise antreibbare Umlaufförderer 21 mit je wenigstens einem Behältersatz aufweist. Diese Anordnung bietet den Vorteil, daß in der die Anzeige 11 aufweisenden Auswahlstation 22 die Überprüfung der angezeigten Auswahl an Hand der in den Behältern 8 einsehbaren Körnergruppen bei stillstehendem Umlaufförderer 21 vorgenommen werden kann, während die Behälter des Umlaufförderers 21 im Bereich der Wiegeeinrichtung 5 schrittweise befüllt und des Umlaufförderers 21 im Bereich der Magazinfülleinrichtung 14 schrittweise entleert werden, so daß nach einer Drehung des Drehtisches 20 um 120° die zuletzt über die Meßeinrichtung 5 befüllten Behälter 8 in die Auswahlstation 22 gelangen, die vor dem Drehschritt ausgewählten Behälter 8 in die Magazinfülleinrichtung 14 entleert werden können und die vorher entleerten Behälter mit den abgewogenen Körnergruppen befüllt werden.

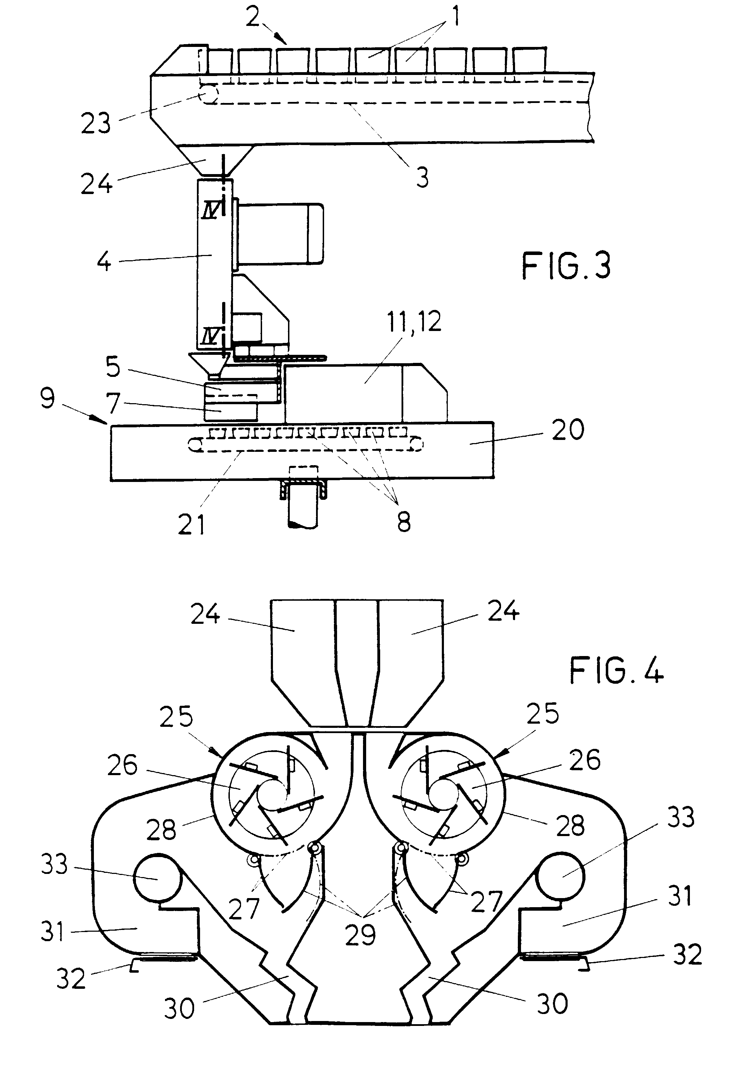

In der Fig. 3 ist die Anordnung der Einzelpflanzendrescheinrichtung 4 und der Meßeinrichtung 5 in bezug auf den Drehtisch 20 näher dargestellt. Die über den Umlaufförderer 3 angeförderten Einzelpflanzen fallen im Bereich der Umlenkrolle 23 aus den Behältern 1 durch einen Einführtrichter 24 in die Einzelpflanzendrescheinrichtung 4, die zur Anpassung an die Nebeneinanderreihung der Behälter 1 in zwei parallelen Reihen aus zwei gesonderten Drescheinheiten 25 besteht. Gemäß der Fig. 4 werden die in die Einfülltrichter 24 einzeln abgeworfenen Zuchtpflanzen von den Dreschtrommeln 26 erfaßt und bei geschlossener Auswurfklappe 27 (strichpunktierte Stellung) ausgedroschen, bis alle Samenkörner freigelegt sind. Danach wird die Auswurfklappe 27 geöffnet, die mit einer an das Dreschtrommelgehäuse 28 angelenkten Speicherklappe 29 einen Zwischenspeicher für das Dreschgut bildet. Aus diesem Zwischenspeicher werden dann die Samenkörner über einen Austragskanal 30 der Meßeinrichtung 5 zugeführt, wobei eine Windsichtung erfolgt, mit deren Hilfe die Spreu von den Samenkörnern getrennt und in einer Kammer 31 gesammelt wird, die über Austragsschieber 32 entleert werden kann. Die für die Windsichtung vorgesehenen Saugluftanschlüsse sind mit 33 bezeichnet.

Die in die Meßeinrichtung 5 entleerten Samenkörner werden je Zuchtpflanze gewogen und gruppenweise über die an die Wiegeeinrichtung 5 angeschlossene Fülleinrichtung 7 in die Behälter 8 des jeweiligen Umlaufförderers 21 gefüllt, die schrittweise an der Fülleinrichtung 7 vorbeibewegt werden. Die Meßeinrichtung 5 kann zwei voneinander unabhängige Wiegeeinheiten aufweisen. Wegen der Zwischenlagerung der Samenkörner in den Zwischenspeichern der Drescheinheiten 25 ist dies aber keineswegs zwingend erforderlich. Sind alle Behälter 8 eines Behältersatzes mit einer Körnergruppe gefüllt, so wird der Drehtisch 20 um 120° gedreht, so daß die neu befüllten Behälter 8 zur Auswertestation 22 gelangen, in der die zwölf schwersten der achtzehn Körnergruppen über die Anzeige 11 ersichtlich gemacht werden.

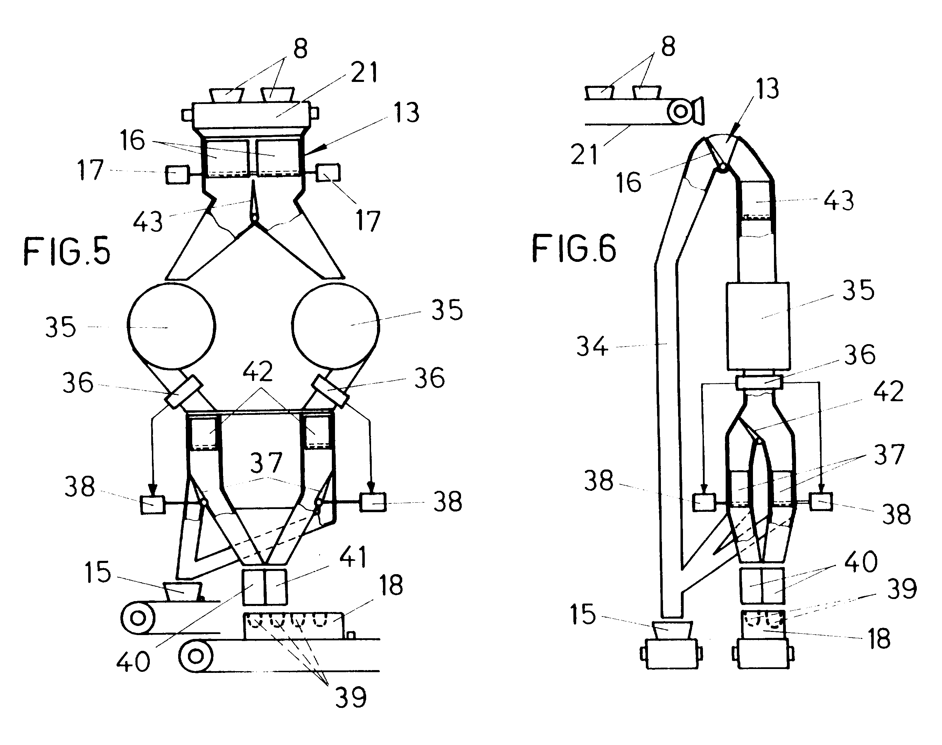

Im Bereich der Magazinfülleinrichtung 14 sind die nicht ausgewählten Körnergruppen auszuscheiden, und zwar mit Hilfe der Förderweiche 13. Gemäß den Fig. 5 und 6 sind entsprechend der reihenweisen Anordnung der Behälter 8 zwei Umschaltklappen 16 in voneinander getrennten Förderwegen vorgesehen, so daß nebeneinander angeordnete Behälter 8 gleichzeitig ohne Vermengungsgefahr der Samenkörner entleert werden können. Über die Auswerteschaltung 10 wird der Stelltrieb 17 für die voneinander unabhängig betätigbaren Umschaltklappen 16 so angesteuert, daß die jeweils ausgewählten Körnergruppen der Magazinfülleinrichtung 14 zugeführt werden, während die auszuscheidenden Körnergruppen über eine Ausscheidungsleitung 34 in den Sammelbehälter 15 geleitet werden. Die Magazinfülleinrichtung 14 umfaßt zwei Vereinzelungseinrichtungen 35, die mit je einer im ausführungsbeispiel als Zähleinrichtung ausgebildeten Meßeinrichtung 36 verbunden sind. Da diser Meßeinrichtung 36 eine Förderweiche 37 nachgeschaltet ist, deren Stelltrieb 38 über die zugehörige Meßeinrichtung 36 angesteuert werden kann, kann die in die einzelnen Aufnahmekammern 39 der Saatgutmagazine 18 entleerbare Anzahl an Samenkörnern beschränkt werden. weil die überschüssigen Samenkörner nach dem Umschalten der Förderweiche 37 wieder in den Sammelbehälter 15 geleitet werden können. Die Meßeinrichtung 36 für die vereinzelten Samenkörner kann aber auch zur Bestimmung des Körnergewichtes bzw. -volumens ausgeführt sein, falls eine volumen- oder gewichtsbezogene Abfüllung verlangt wird.

Wegen der paarweisen Anordnung der Behälter 8 können auch die Aufnahmekammern 39 der Saatzuchtmagazine 18 paarweise befüllt werden. Um dabei zwischen paarweise nebeneinander- oder hintereinander gereihten Aufnahmekammern wählen zu können, können paarweise angeordnete Austragsleitungen 40 und 41 vorgesehen sein, die über Umschaltklappen 42 angewählt werden können. Über eine zusätzliche Umschaltklappe 43 kann außerdem der Abwurf der Samenkörner in die beiden den beiden Behälterreihen zugeordneten Förderwege gesteuert werden.

Die Erfindung ist selbstverständlich nicht auf das dargestellte Ausführungsbeispiel beschränkt. So könnte der Drehtisch 20 durch einen anderen Schrittförderer 9 ersetzt werden, der ebenfalls drei jeweils für sich antreibbare Umlaufförderer besitzt, die zyklisch verlagert werden können. Außerdem können unterschiedlich aufgebaute Einzelpflanzendrescheinrichtungen oder Magazinfülleinrichtungen zum Einsatz kommen. Entscheidend ist ja, daß über die Auswerteschaltung 10 in Abhängigkeit von den gespeicherten Meßwertdaten eine Auswahl der in einer bestimmten Reihenfolge abgelegten Körnergruppen getroffen wird, so daß über die Auswerteschaltung das ordnungsgemäße Entleeren der Körnergruppen in die einzelnen Aufnahmekammern der Saatgutmagazine sichergestellt wird.

## Patentansprüche

1. Vorrichtung zum Befüllen von Saatgutmagazinen mit Samenkörnern ausgewählter Zuchtpflanzen, bestehend aus einer Meßeinrichtung zum Erfassen vorgegebener Auswahlparameter, beispielsweise des Gewichtes oder der Körnerzahl, einer vorgegebenen Anzahl von jeweils aus den Samenkörnern einer Zuchtpflanze gebildeten Körnergruppen, aus einer an die Meßeinrichtung angeschlossenen Einrichtung zum Befüllen einer der Anzahl der Körnergruppen entsprechenden Zahl von Behältern mit den einzelnen Körnergruppen und aus einer mit den Körnergruppen ausgewählter Behälter beschickbaren Magazinfülleinrichtung, dadurch gekennzeichnet, daß ein Speicher (6) für die den einzelnen Behältern (8) zugeordneten Meßwerte der Meßeinrichtung (5) in eine Auswerteschaltung (10) zur meßwertabhängigen Auswahl einer vorgegebenen Anzahl von Behältern (8) einlesbar ist und daß die mit einer Anzeige (11) verbundene Auswerteschaltung (10) eine Förderweiche (13) ansteuert, die einen die Behälter (8) in einer vorbestimmten Anordnung aufnehmenden Schrittförderer (9) einerseits mit einem Sammelbehälter (15) für die auszuscheidenden Körnergruppen und anderseits mit der Magazinfülleinrichtung (14) verbindet.

2. Vorrichtung nach Anspruch 1, dadurch gekennzeichnet, daß die in die Auswerteschaltung (10) eingelesenen Meßwerte der Meßeinrichtung (5) über eine Eingabeeinheit (12) überschreibbar sind.

3. Vorrichtung nach Anspruch 1 oder 2, dadurch gekennzeichnet, daß der Schrittförderer (9) drei zwischen der Meßeinrichtung (5), einer die Anzeige (11) und Eingabeeinheit (12) für die Auswerteschaltung (10) umfassenden Auswahlstation (22) und der Förderweiche (13) verlagerbare, jeweils für sich schrittweise antreibbare Umlaufförderer (21) mit jeweils zumindest einem der Anzahl der Körnergruppen entsprechenden Behältersatz aufweist.

4. Vorrichtung nach Anspruch 3, dadurch gekennzeichnet, daß die Umlaufförderer (21) auf einem Drehtisch (20) angeordnet sind.

5. Vorrichtung nach einem der Ansprüche 1 bis 4, dadurch gekennzeichnet, daß die Magazinfülleinrichtung (14) wenigstens eine über die Auswerteschaltung (10) ansteuerbare Förderweiche (42) zum Befüllen neben- bzw. hintereinandergereihter Aufnahmekammern (39) der Saatgutmagazine (18) aufweist.

6. Vorrichtung nach einem der Ansprüche 1 bis 5, dadurch gekennzeichnet, daß die Magazinfülleinrichtung (14) wenigstens eine Vereinzelungseinrichtung (35) für die Samenkörner der einzelnen Körnergruppen mit einer angeschlossenen Meßeinrichtung (36), beispielsweise zum Zählen oder Wiegen der vereinzelten Samenkörner, aufweist und daß der Vereinzelungseinrichtung (35) eine von der Meßeinrichtung (36) ansteuerbare Förderweiche (37) nachgeordnet ist, die die Vereinzelungseinrichtung (35) einerseits mit dem zu befüllenden Saatgutmagazin (18) und anderseits mit einem Sammelbehälter (15) verbindet.

7. Vorrichtung nach einem der Ansprüche 1 bis 6, dadurch gekennzeichnet, daß der Meßeinrichtung (5) für die einzelnen Körnergruppen zumindest eine in die Meßeinrichtung (5) entleerbare Einzelpflanzendrescheinrichtung (4) vorgeschaltet ist.
